# EUROPEAN PATENT APPLICATION

(11) **EP 1 544 613 A1**
(43) Date of publication of application: **22.06.2005**
(21) Application number: 04078342.5
(22) Date of filing: 09.12.2004
(51) Int. Cl.: G01N 31/22, F16K 37/00, F16K 1/30, F17C 13/04, G05D 16/00

(54) **Regulator provided with an indicator unit, and kit of parts comprising an indictor unit for the purpose of such a regulator and a gas source**

(30) Priority: 17.12.2003 NL 1025042
(71) Applicant: SGT Singapore Holdings Pte Ltd. c.i.p.o.f., 048424 Singapore (SG)
(72) Inventor: van der Maas, Marinus Frans, 4341 LC Arnemuiden (NL)
(74) Representative: Winckels, J.H.F., Mr. Ir.

(57) **Abstract**

A regulator provided with an inlet connection (8) for connection to a gas source (1), such as for instance a gas cylinder, a compressor or a gas generator, and provided with an outlet connection (9) for connection to a further gas pipe system (4), the regulator (2) being provided with a high pressure chamber and a low pressure chamber which are mutually connected by a pressure reductor, such that in use the gas pressure in the low pressure chamber is lower than the pressure in the high pressure chamber, the regulator (2) being provided with a connection (16) for an exchangeable indicator unit (17), the connection (16) being such that the gas coming from the gas source (1) flows through the indicator unit (17), the indicator unit (17) being provided with means for signaling undesirable components in the gas flowing through the indicator unit (17).

## Description

The invention relates to a regulator provided with an inlet connection for connection to a gas source and provided with an outlet connection for connection to a further gas pipe system, the regulator being provided with a high pressure chamber and a low pressure chamber which are mutually connected by a pressure reductor, such that in use the gas pressure in the low pressure chamber is lower than the pressure in the high pressure chamber.

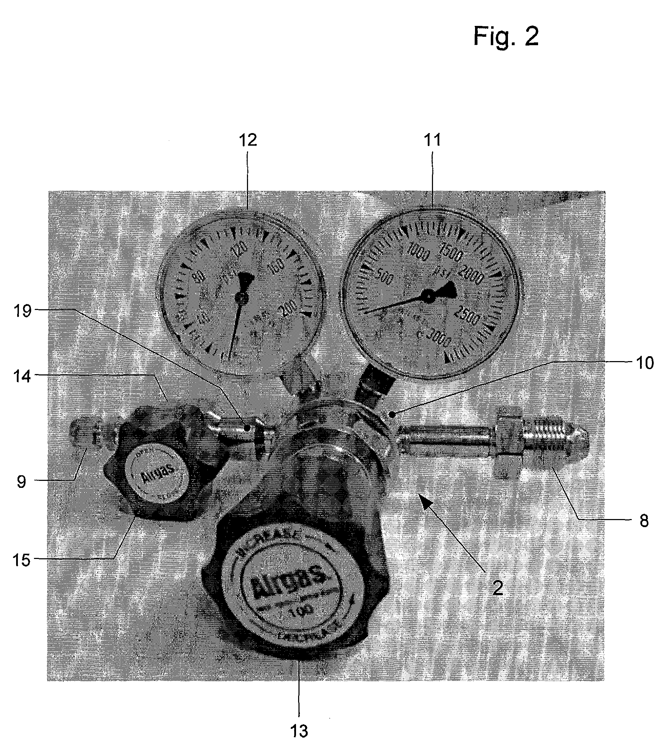

Such a regulator is known from practice and is represented in Fig. 2 of the present application. Such a regulator is generally connected directly to a gas source, such as, for instance, a gas cylinder, gas generator, or a compressor. The gas cylinders are generally disposed in a so-called gas cabinet which is mostly set up outside. In the gas cabinet are a number of regulators to which the gas cylinders can be connected. The regulators reduce the pressure in the gas source, which is, for instance, in the order of a few tens to a few hundreds of bars, to a pressure required for the process, which pressure is in the range of a few bars or even less than one bar. Downstream of the regulator extends a gas pipe system through which the gas flows to the downstream process for which the gas is needed.

In different uses, it is of major importance that the gas pipe system is not contaminated with gas components that are harmful to the process for which the gas is supplied. Examples of such processes to be considered here are gas chromatography, mass spectrometry, production processes under conditioned gas conditions, such as production processes for the manufacture of wafers, DVDs, display screens or the like. Also for the purpose of driving mechanisms working on compressed air, it may be of importance that the compressed air is absolutely free of moisture and oil to ensure reliable and durable operation of the driving mechanism. Compressed-air drives are for instance used in CNC machines or like production machines. Also for welding uses, it may be of importance that the gas serving to shield the welding bath is very pure and does not contain any oxygen.

Gas sources, and more particularly gas cylinders, always contain gas of a particular purity, which means that the gas source also contains components that are harmful to a downstream process. When these components end up in the gas pipe system, it is often necessary to clean the gas pipe system by flushing it with pure gas for a large number of hours. All that time, it is impossible to continue the downstream process, because there is no supply of clean gas possible since the gas pipe system is contaminated and is to be cleaned. The object of the present invention is to provide a regulator by means of which these problems can be solved.

To that end, according to the invention, the regulator of the type described in the opening paragraph hereof is characterized in that it is provided with a connection for an exchangeable indicator unit, the connection being such that the gas coming from the gas source flows through the indicator unit, the indicator unit being provided with means for signaling undesirable components in the gas flowing through the indicator unit.

Preferably, when a new gas source, such as a gas cylinder, is connected to the regulator, also a new indicator unit is placed on the regulator. When the gas cylinder contains sufficiently clean gas, it will be possible for substantially the entire contents of the gas cylinder to flow through the indicator unit without breakdown of the indicator unit occurring, that is, without undesirable components ending up in an undue amount in the downstream gas pipe system. It may occur, however, that the gas cylinder or the gas coming from a compressor or gas generator does not meet the requirements set and that it contains more undesirable components than expected. In that case, the indicator unit will signal sooner that undesirable components may end up in the downstream gas pipe system.

According to a further elaboration of the invention, the means for signaling undesirable components in the gas flowing through the indicator unit can comprise an indicator material, which discolors in contact with such undesirable components, the indicator material being included in a transparent indicator material housing. Such indicator materials are known per se from practice for filters. Examples to be considered are potassium dichromate, silica gel, sulfuric acid and like substances.

A user will have to check the color of the indicator material periodically to be able to determine whether the gas flowing out of the regulator into the gas pipe system still has the required purity.

According to a further elaboration of the invention, the indicator unit may be provided with at least one sensor for sensing the color of the indicator material. By means of such a sensor, the color check, instead of being performed by a user, can be automated.

According to an alternative further elaboration of the invention, the means for signaling undesirable components can comprise a temperature sensor as well as an indicator material, the indicator material being included in an indicator material housing, this indicator material rising in temperature in contact with such undesirable components, and the temperature sensor being arranged for measuring such temperature rise.

As the undesirable components enter into a reaction with the indicator material, at least in some cases energy is thereby released in the form of heat. This heat can be signaled by the temperature sensor. When the temperature sensor is arranged adjacent a downstream end of the indicator housing in which the indicator material is contained, a temperature rise of that sensor means that the indicator unit is about to break down. In that case, the signal produced by the respective sensor can be used to terminate the downstream process and to interrupt the supply of gas from the gas source.

The invention further relates to a kit of parts comprising a gas source, such as a gas cylinder, and an indicator unit for use with a regulator according to the invention.

Further, the invention relates to a kit of parts comprising a regulator with an indicator unit according to the invention and a gas source, such as a gas cylinder.

According to a further elaboration of the invention, the gas cylinder may be provided with a transponder.

The invention will presently be elucidated on the basis of an exemplary embodiment with reference to the drawing.

Fig. 1 shows schematically an assembly of a gas cylinder, a gas pipe system, and a regulator with indicator unit;

Fig. 2 shows a regulator which is known from the state of the art; and

Fig. 3 shows a cross-sectional view of an exemplary embodiment of an indicator unit.

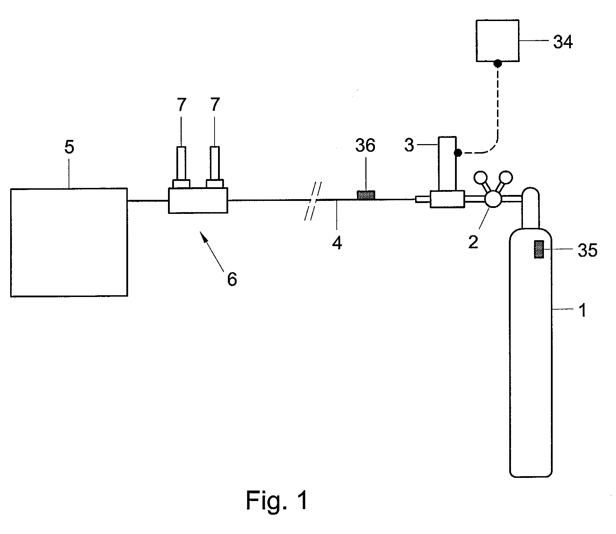

Fig. 1 schematically shows a gas cylinder 1 which is connected to a gas pipe system 4 via a regulator 2 and an indicator unit 17 which is part of the regulator 2. The indicator unit 17 or cartridge 17 is provided with a quick-change coupling part 26 which is detachably connectible to a foot 16 which is part of the regulator 2.

Instead of a gas cylinder 1, a compressor or a gas generator may be provided. The gas pipe system 4 passes to a process unit 5 for the purpose of which the gas is supplied from the gas source, in the present case the gas cylinder 1. Optionally, directly upstream of the process unit 5, a filter unit 6 with quick-change filters 7 may be arranged. Such a filter unit 6 with quick-change filters 7 is described, for instance, in the previously filed patent application NL-1023520.

An example of a regulator 2 according to the state of the art is represented in Fig. 2. The regulator 2 is provided with an inlet connection 8 by means of which the regulator 2 can be connected to a gas cylinder 1. Further, the regulator 2 is provided with an outlet connection 9 for connection to a further gas pipe system 4. In the regulator housing 10, a high pressure chamber and a low pressure chamber are present. The two chambers are mutually connected by a pressure reductor which is not represented but which is generally known from the state of the art. Pressure gauge 11 is in communication with the high pressure chamber and pressure gauge 12 is in communication with the low pressure chamber. By means of rotary knob 13, the pressure in the low pressure chamber, and hence in the gas pipe system 4, can be set. Further, the regulator is provided with a shut-off valve 14, which is operable with a control knob 15.

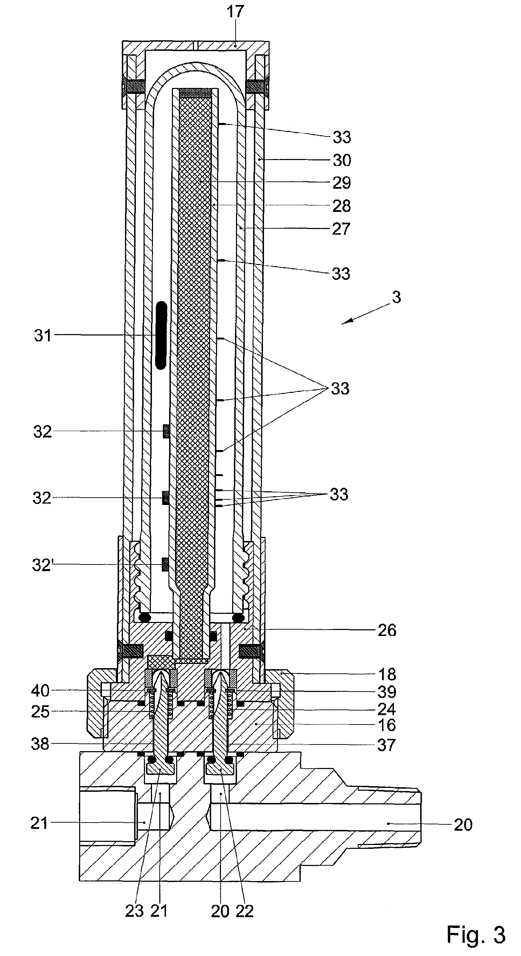

A regulator 2 according to the invention is distinguished from the regulator represented in Fig. 2 in that it is provided with an indicator unit 17. The indicator unit 17 or cartridge 17 comprises a quick-change coupling part 26 which is detachably connected to the above-mentioned foot 16 via a fastening nut 18. The foot 16 can be an integral part of the regulator housing 10. The exemplary embodiment shown in Fig. 3, however, shows a foot 16 which is arranged to be taken up in the pipe part 19 which is connected to the low-pressure chamber in the regulator housing 10. The foot 16 is provided with a gas supply line 20 and a gas discharge line 21. Both lines can be shut off by valve members 22, 23, which are in a closed position when no cartridge 17 is placed on the foot 16. Upon placement of the cartridge 17 on the foot 16, the valve members 22, 23 are pressed in downward direction, so that an open gas communication is created between the interior of the cartridge 17 and the gas supply line 20 and the gas discharge line 21. Upon loosening of the fastening nut 18 and removal of the cartridge 17 from the foot 16, springs 24, 25 will pull the valve members 22, 23 into the closed position, so that the fluid communication between the gas supply line 20 and the gas discharge line 21 is broken. The fastening nut 18 is provided with internal thread which engages external thread of the foot 16. The fastening nut 18 can be simply loosened and tightened by hand.

The cartridge 17 is provided with a quick-change coupling part 26 on which a preferably transparent housing 27 is mounted. The housing 27 can for instance be manufactured from glass. In the housing 27, there is further an indicator material housing 28 in which the indicator material 29 is included. The indicator material 29 changes color when it comes into contact with undesirable components from the gas flowing past. The gas enters via gas supply line 20, flows via valve member 22 into the housing 27, outside of and along the indicator material housing 28. Next, at the top, it enters the indicator material housing 28 and flows through the indicator material 29 to valve member 23. Via valve member 23, it leaves the gas discharge line 21 to be further transported via the gas pipe system 4. For reasons of safety, around the housing 27, a protective sleeve 30 is arranged which may for instance be manufactured from acrylate.

For environmental reasons, it is favorable when the housing 27 is detachably connected to the quick-change coupling part 26. It is further favorable when the indicator material housing 28 is detachably connected to the quick-change coupling part 26. The indicator unit 17 is preferably further provided with a transponder 31. In the present exemplary embodiment, the transponder 31 is arranged on the housing 27. It is also possible, however, to fit the transponder 31 on the indicator material housing 28, protective sleeve 30 or the quick-change coupling part 26.

Optionally, on the indicator material housing 28, sensors 32', 32 may be provided which are arranged for measuring a discoloration of the indicator material 29 or for sensing a temperature rise of the indicator material 29.

The signals that are produced by these sensors 32, 32' can for instance be automatically transmitted via the transponder 31 to a control 34. The control 34 can thereupon warn the user by means of sound and/or light signals. The control 34 can further perform an action, which action comprises for instance advice to the user to exchange the respective gas cylinder 1 and to exchange the respective cartridge 17. Further, the action can comprise the automatic closure of a shut-off valve 14, such that the gas supply to the gas pipe system 4 is blocked. To that end, the shut-off valve 14 should naturally allow of automatic energization, for instance in that it is an electromagnetic shut-off valve.

Further, optionally, a graduation 33 may be provided along the indicator material housing 28, by means of which the user can determine whether the gas cylinder 1 already needs to be replaced with a new gas cylinder 1. In fact, it has been found that the concentration of the number of contaminating components increases according as the gas cylinder 1 becomes more depleted. This has as a consequence that the discoloration of the indicator material will occur increasingly fast and that the indicator material 29, which not only signals the undesirable components but also absorbs them and hence removes them from the gas flow, will become saturated faster with a more depleted gas cylinder than with a full gas cylinder. That is why the graduation 33 in the exemplary embodiment of Fig. 3 is not linear but logarithmic.

Since a nearly saturated indicator 3 also signifies that, at least in general, the gas cylinder 1 is nearly empty, the signals produced by the sensors 32 can also be used to automatically place an order for a new gas cylinder with the supplier via the control 34. Optionally, the gas cylinder 1 may be provided with a transponder 35 which communicates with the control 34. Thus, for instance, a protection can be incorporated by means of which it can be verified whether the respective gas cylinder 1 indeed contains the gas which is intended for connection to the regulator 2. In fact, it is not uncommon in practice for a user to connect the wrong gas cylinder 1 to a regulator 2. It will be clear that this can have disastrous consequences, in the sense that the downstream gas pipe system 4 then needs to be flushed with the right gas for a very long time. By having the control check whether the gas cylinder 1 with transponder 35 is indeed suitable and intended for connection to the regulator 2 which is provided with an indication unit 3 with transponder 31, such mistakes can be prevented, at least be discovered in time. In order to reduce the chances of mistakes still further, also the gas pipe system 4 may be provided with a transponder 36. The control 34 can then check whether the gas from the cylinder 1 with transponder 35 matches the cartridge 17 with transponder 31 and matches the gas pipe system 4 with transponder 36. If these checks are affirmative, this precludes the risk of the wrong gas source or the wrong cartridge 17 being connected to the respective gas pipe system 4. It is even possible to provide the operator who replaces the gas cylinder with a badge with a transponder, such that the control 34 can establish whether the person who exchanges the gas cylinder 1 is actually authorized to do so.

The gas cylinder 1 with transponder 35 moreover has the advantage that the gas cylinder can be simply found by the supplier and the user. In fact, it has been found that in practice, at least 10 percent of gas cylinders are lost. By means of gas cylinders 1 which are provided with transponders 35, this percentage can be drastically reduced.

It is clear that the invention is not limited to the exemplary embodiment described but that various modifications are possible within the framework of the invention, as defined by the claims.

An additional advantage of the regulator according to the invention is that the indicator unit 17 to some extent has a filtering action as well, in that the indicator material 29 absorbs the undesirable components until it is saturated and breaks down. To this end, for instance for welding uses, a gas cylinder with a somewhat lower grade of gas can be connected to the gas pipe system, while yet solely gas meeting the requirements set will arrive at the process. Thus, with a relatively inexpensive gas cylinder, still a process can be carried out which normally requires a more expensive gas cylinder with a higher grade gas.

## Claims

1. A regulator provided with an inlet connection (8) for connection to a gas source (1), such as for instance a gas cylinder, a compressor or a gas generator, and provided with an outlet connection (9) for connection to a further gas pipe system (4), the regulator (2) being provided with a high pressure chamber and a low pressure chamber which are mutually connected by a pressure reductor, such that in use the gas pressure in the low pressure chamber is lower than the pressure in the high pressure chamber, the regulator (2) being provided with a connection (16) for an exchangeable indicator unit (17), the connection (16) being such that the gas coming from the gas source (1) flows through the indicator unit (17), the indicator unit (17) being provided with means for signaling undesirable components in the gas flowing through the indicator unit (17).

2. A regulator according to claim 1, wherein the means for signaling undesirable components in the gas flowing through the indicator unit (17) comprise an indicator material (29), which discolors in contact with said undesirable components, the indicator material (29) being included in a transparent indicator material housing (28).

3. A regulator according to claim 2, wherein the means for signaling undesirable components comprise a color sensor (32'), which color sensor (32') is arranged for sensing discoloration of the indicator material (29).

4. A regulator according to claim 1, wherein the means for signaling undesirable components comprise a temperature sensor (32) as well as an indicator material (29), the indicator material (29) being included in an indicator material housing (28), the indicator material (29) rising in temperature in contact with said undesirable components, and the temperature sensor (32) being arranged for measuring said temperature rise.

5. A regulator according to claim 1 or 2, wherein the connection comprises a quick-change coupling (16) which is provided with an outlet opening (37) and an inlet opening (28) to which, respectively, an inlet (39) and an outlet (40) of an indicator unit (17) are connectible, while the indicator unit (17) contains the indicator material (29).

6. A regulator according to any one of the preceding claims, wherein the indicator unit (17) is provided with a transponder (31).

7. A regulator according to claim 3 or 4 and 6, wherein the transponder (31) also comprises the color sensor and temperature sensor, respectively.

8. A regulator according to claim 6 or 7, wherein the transponder (31) further comprises a discoloration sensor.

9. A regulator according to any one of the preceding claims, wherein the indicator unit (17) is provided with a graduation (33) which is provided along the indicator material housing (28).

10. A regulator according to any one of the preceding claims, wherein the indicator unit (17) is provided with sensors (32, 32') which are arranged at different positions along the indicator material housing (28), which sensors (32, 32') are arranged for sensing a change in condition of the indicator material (29) in the indicator material housing (28) at the position of the respective indicator unit (17), while a control (34) is provided, which is connected to the sensors (32, 32') and which performs an action depending on the signals produced by the sensors (32, 32').

11. A regulator according to claim 10, wherein the action comprises an advice to the user to exchange the respective gas source (1).

12. A regulator according to claim 10 or 11, wherein the action comprises an advice to the user to exchange the respective indicator unit (17).

13. A regulator according to claim 10, wherein the action comprises automatically closing a shut-off valve (14), such that the gas supply to the gas pipe system (4) is blocked.

14. A regulator according to any one of the preceding claims, wherein the regulator (2) is provided with a shut-off valve (14).

15. A kit of parts comprising a gas source, such as a gas source (1) and an indicator unit (17) for use with a regulator (2) according to any one of the preceding claims.

16. A kit of parts comprising a regulator (2) with indicator unit (17) according to any one of claims 1-14 and a gas source (1), such as a gas cylinder.

17. A kit of parts according to claim 15 or 16, wherein the gas source (1) is provided with a transponder (25).
